# EUROPEAN PATENT APPLICATION

(11) **EP 0 637 605 A1**
(43) Date of publication of application: **08.02.1995**
(21) Application number: 94112138.6
(22) Date of filing: 03.08.1994
(51) Int. Cl.: C08J 9/36, B29C 44/00

(54) **Process for forming polyurethane foam using mechanical cooling and an additive**

(30) Priority: 03.08.1993 US 101189
(71) Applicant: OSI SPECIALTIES, INC., Tarrytown, NY 10591-6728 (US)
(72) Inventor: Hilker, Brian, Windfield, West Virginia 25213 (US); Gerkin, Richard, Cross Lanes, West Virginia 25303 (US); Pickrell, Greg, Cross Lanes, West Virginia 25313 (US)
(74) Representative: Wibbelmann, Jobst, Dr., Dipl.-Chem.

(57) **Abstract**

This invention describes a method for making flexible, conventional, polyurethane slabstock foam having a substantially open cell structure from a polyfunctional polyol of 400-1500 equivalent weight, water, isocyanate, polyurethane catalysts and a foam processing aid which are combined to form a polyurethane foam and then mechanically cooled after the foam has risen. The foam processing aid contains at least one polyfunctional crosslinking agent which has at least two isocyanate reactive functionalities thereon.

## Description

### Background of the Invention

Environmental pressures and ever-tightening governmental regulations have shifted flexible slabstock foam market production away from the use of conventional blowing agents such as CFC-11, methylene chloride and 1,1,1-trichloroethane. Generally, this pressure has forced the industry towards formulations with higher weight percentages of water. The physical blowing of such high water urethane foam formulations takes place through the evolution of carbon dioxide from the reaction of water and isocyanate. This replaces the traditional blowing method derived from the volatilization of conventional low boiling liquid blowing agents such as those listed above.

The shift to these higher water formulations and away from conventional blowing agents has placed many additional demands on flexible slabstock foam production. Three of these worthy of special notation are described. First, the use of higher amounts of water typically results in higher exotherms leading to increased foam discoloration, scorching problems, and potential for fire. Second, an increased urea content is common in higher water systems leading to higher hardness values. Thus, some softer foam grades are not readily attainable using only water as the blowing agent. Third, a dramatic detrimental change in some of the key physical properties of the foam, such as compression sets (ASTM D-3574), tensile strengths (ASTM D-3574), tear strengths (ASTM D-3574), elongation values (ASTM D-3574) and hysterisis values (ASTM D-3574) are also common in many higher water content systems.

These problems have generated many opportunities for creative solutions to overcome the inherent pitfalls of the current all water blown slabstock foam production technology. Two of the primary solutions to these problems are the use of low index technologies and the use of mechanical cooling methods. The index number is the amount of isocyanate present in the foam as a percentage of the calculated stoichiometric amount of isocyanate needed to react all active hydrogen components m the formulation. For example, an isocyanate index of 110 means that 110% of the amount of isocyanate stoichiometrically required to react with all active hydrogen compounds is used.

Low index technologies use less than 100% of the amount of isocyanate needed to react all active hydrogen components in the formulation. Low index technologies allow for lower exotherms and lower hardness values relative to conventional index all water based (i.e., indexes typically greater or equal to 100) systems. A lower index yields lower heat evolution due to lower isocyanate concentration and consequently yields lessened temperature related scorch and discoloration problems. Unfortunately, these lower index systems traditionally have been plagued by splitting problems, i.e., sizeable openings or voids in either or both the surface and/or interior of the foams indicating a general lack of foam polymer network integrity. Additionally, such low index chemistries have been beset with poor physical properties including unacceptably high compression sets and foam integrity (e.g., crumbling) particularly in the foam centers. Such problems have for the most part limited the use of these low index technologies to indexes above about 96 index, despite the use of some property enhancing additives.

Low index technologies are described in U.S. Patent No. 4,970,243 to Jacobs and U.S. Patent No. 4,950,694 to Hager (hereinafter "Hager"). U.S. Patent No. 4,970,243 to Jacobs discloses a process for producing flexible slabstock polyurethane foam comprising reacting one or more polyisocyanates with a compound containing at least two isocyanate-reactive hydrogen atoms and having a molecular weight of about 400 to about 10,000 grams/mole in the presence of water. However, this patent does not disclose the use of additives so the compression sets (ASTM D-3574) are relatively high, greater than 20%. Hager discloses a process for producing polyurethane foams which comprises reacting a mixture comprising polyether polyol, water, an organic polyisocyanate, a polyurethane foam catalyst and a foam processing aid which may include a cell opener. The polyether polyol has an equivalent weight of between 500 to 1300. The foam processing aid contains a crosslinking/extending agent which may be similar in structure to the polyol, but has an equivalent weight of less than 200 and may contain a cell opening agent which is a polyethylene oxide monol and/or polyol with an equivalent weight from about 200 to 5,000. These foams must be allowed to cool in ambient air for at least 16 hours and have been known to have unacceptably high compression sets.

Mechanical cooling methods have also been used to remove excess heat after conventional index (i.e., greater than 100) foam has been formed. This is especially important since conventional index, high water foaming systems typically yield high exotherms; exotherms which are often above the auto-ignition temperatures of these foams if the foams are allowed to remain at these elevated temperatures for an extended period of time. The mechanical cooling technology allows a manufacturer to produce foams which otherwise would likely scorch, discolor, or self-ignite due to (auto-) oxidation chemistries. These cooling processes result in more uniform thermal profiles.

Such mechanical cooling systems typically require foam buns to be cured from 5 minutes to 4 hours (with the average being 10-30 minutes) after full-rise prior to cooling via blowing or vacuuming air through the foam. This air treatment may contain one or more reactive species (water, amines, etc.) and be near or below room temperature. Generally, the foams are significantly cooler and rendered virtually non-reactive after completion of these cooling/treatment processes as is evidenced by little or no Indentation Force Deflection (IFD) (ASTM D-3574) increase over time after cooling is completed. Such processes allow for production schedules to be more "just-in-time" in nature than when using conventional non-cooling production methods. In addition, such processes allow faster overall production of foam.

Mechanical cooling is differentiated from chemical cooling in that an exterior fluid stream, i.e., a gas, is applied to the solidified or gelled foam after rising, rather than the liquid foam containing a blowing agent. A blowing agent cools mainly by heat of evaporation, but also expands the foam, decreasing the foam density. Often the solvating nature of the blowing agents affect the foam morphology leading to softer than expected foam. By removing the blowing agent from conventional high water and high index foams, the foam density and morphology are affected, leading to a different foam. Because of this, the replacement of blowing agents in many high index formulations with mechanical cooling is presently unpredictable.

U.S. Patent 3,890,414 issued to Ricciardi discusses a process for improving the uniformity of the properties of a bun of polyurethane foam by rapidly and uniformly cooling a bun of hot freshly polymerized foam by passing a large quantity of a cooling gas through the foam mass. U.S. Patent 5,128,379 to Stone discusses a process for rapidly cooling hot freshly polymerized foam by passing a fluid coolant stream having a water vapor content which initially is in the range from slightly below to above the dew point. But since the curing profile of foams produced using these cooling systems is significantly different than conventionally cured systems, many of the traditional physical property drawbacks common to high water foaming still remain with such a process. One problem is that the quenching via cooling stops the curing process, thereby rendering a high index foam to resemble in some aspects a foam of a lower index. High compression sets (above 20%) are one of the most noticeable of these physical property deficiencies. Additionally, high water formulations often require the use of highly stabilizing silicone surfactants to control the cell size. Moreover, these mechanical cooling methods contemplate the use of only those conventional high index foam formulations, which all include the blowing agents that are to be avoided.

There has been some attempt in the prior art to combine the use of additives with mechanical cooling systems in the production of polyurethane foams. One such example is U.S. Patent No. 4,537,912 to Griswold which discloses the use of additives in a mechanical cooling system, namely the use of ammonia and other amine components in the post production air cooling stream. The use of these air stream additives is claimed to reduce compression sets of treated foams relative to post production treatment methods using only air or water vapor with no amines. Of note, all foams with good sets shown in these examples were reacted then aged at least 2 hours before the amine containing air treatment. Other, less aged, samples possessed poor 90% compression sets, typically greater than 82% even when treated with these post cure additives.

U.S. Patent No. 5,171,756 to Ricciardi discloses the use of a three step vacuum method to cool, dehumidify, and remove fumes from freshly cured buns to prevent oxidation and auto-oxidation. The polyurethane formulation comprises a polyether polyurethane, an organic diisocyanate, water and at least one softening agent. In addition, the formulations often contain auxiliary blowing agents. A preferred formulation is achieved by utilizing a mixture of two different polyols, a basic polyol having a molecular weight of 2500 to 4000 with a soft polyol with a molecular weight of about 1200 to about 1800. The hydroxyl number of the basic polyol is between about 30 to 80, while the hydroxyl number of the soft polyol is between about 90 and 150.

### Summary of Invention

This invention describes a method for making flexible, conventional, polyurethane slabstock foam having a substantially open cell structure from a polyfunctional polyol of 400-1500 equivalent weight, water, isocyanate, polyurethane catalysts and a foam processing aid which are combined and then mechanically cooled. The foam processing aid contains at least one polyfunctional crosslinking agent which has at least two isocyanate reactive functionalities thereon and optionally contains a cell opening agent.

### Description of Invention

The present invention is based on the applicants' findings that small amounts of foam additives in conventional all water blown polyurethane slabstock foam formulations which are subjected to mechanical cooling processes shortly after blow-off yield split free, open cell structured foam with acceptable physical properties, particularly compression sets. The area of polyurethane technology to which this invention relates is that of polyurethanes with moderate resiliency and moderate to high IFD Return Percentages (ASTM D-3574). The present invention shows enhanced compression set performance for polyurethanes using this additive technology combined with mechanical cooling. Thus, the present invention eliminates a key problem of all prior water blown, low density, soft polyurethane foam formulations employing mechanical cooling methods.

### Components of the Polyurethane Slabstock Foam

The polyurethane slabstock foam contemplated herein is comprised of (I) one or more polyols; (II) one or more organic isocyanates; (III) blowing agents; (IV) one or more surface active agents; (V) one or more catalysts; (VI) one or more foam processing aids; and optionally, one or more of (VII) other standard ingredients known to those skilled in the art. A similar formulation of polyurethane foam has been previously disclosed in Hager, which is incorporated herein by reference. To follow is a description of each component of the invention.

### Polyol

The polyols, Group (I), which can be utilized in the present invention include, but are not limited to, the following polyether polyols: (a) alkylene oxide adducts of polyhydroxyalkanes; (b) alkylene oxide adducts of non-reducing sugars and sugar derivatives; (c) alkylene oxide adducts of polyphenols; and (d) alkylene oxide adducts of polyamines and polyhydroxyamines. Alkylene oxides having two to four carbon atoms generally are employed, with propylene oxide, ethylene oxide and mixtures thereof being particularly preferred.

Any material having active hydrogens, as determined by the Zerewitinoff method, may be utilized to some extent and therefore is included within the broad definition of the polyols of Group(I). For example, amine-terminated polyether polyols, hydroxyl-terminated polybutadiene polyols and many others are known and may be used as a minor component in combination with the above-identified conventional polyether polyols.

Generally, the polyol compound (I) should have an equivalent weight in the range of about 400 to about 1500 grams/equivalent and an ethylene oxide content of less than 20%. Preferably the equivalent weight is in the range of about 500 to about 1300 grams/equivalent, and most preferably between about 750 and 1250 grams/equivalent. The polyol or polyol blend should have an average hydroxy functionality of at least 2. The equivalent weight is determined from the measured hydroxyl number. The hydroxyl number is defined as the number of milligrains of potassium hydroxide required for the complete hydrolysis of the fully acetylated derivative prepared from one gram of polyol. The relationship between the hydroxyl number and equivalent weight is defined by the equation: OH = 56,100/equivalent weight, where OH equals the hydroxyl number of the polyol. Thus, polyols have hydroxyl numbers preferably in the range of about 43 to about 110, and more preferably in the range of about 45 to about 75.

Preferably the polyols should include the poly(oxypropylene) and poly(oxyethyleneoxypropylene) triols. Ethylene oxide, when used, can be incorporated in any fashion along the polymer chain. Stated another way, the ethylene oxide can be incorporated either in internal blocks, as terminal blocks, or may be randomly distributed along the polyol chain. However, the manner of incorporation and the ethylene oxide content of the polyol preferably is as noted above. Thus, ethylene oxide is used at a level below about 20% by weight, preferably below about 15% by weight, and is located primarily within the interior of the polyol chain.

Preferably, a portion or all of the polyol component may be added in the form of a polyol polymer in which reactive monomers have been polymerized within a polyol to form a stable dispersion of the polymer solids within the polyol.

The amount of polyol used is determined by the amount of product to be produced. Such amounts may be readily determined by one skilled in the art.

### Isocyanates

Organic isocyanates (Group II) useful in producing polyurethane foam in accordance with this invention are organic compounds that contain, on average, between about one and a half and about six isocyanate groups, and preferably about two isocyanate groups. Suitable organic polyisocyanates include the hydrocarbon diisocyanates, e.g., the alkylene diisocyanates and the aryl diisocyanates and more specifically, diphenylmethane diisocyanate and toluene diisocyanate ("TDI"). Preferred polyisocyanates are 2, 4 and 2, 6 toluene diisocyanates and their mixtures having a functionality of about 2, which are broadly referred to herein simply as TDI. The most preferred polyisocyanate is 80/20 TDI (i.e., a mixture of 80% 2,4-toluene diisocyanate and 20% 2,6-toluene diisocyanate).

The amount of isocyanate to be used is dependent upon the index of foam desired and the final properties of the foam to be formed. As stated above, if the index is 100, then there is a stoichiometric equivalent of the amount of isocyanate needed to react with the polyol component (Group I) and the other active hydrogen containing components in the system. While the present invention may be practiced in a wide range of indexes, the preferred range of use is indexes between 95 and 115 (hereinafter "High Index"). The low index formulation taught by Hager (60-95, hereinafter "Low Index"), which may be appropriate in cases without mechanical cooling, may become problematic where the Low Index foam is quenched by mechanical cooling. The inventors believe the reason for this is that the quenching stops the curing process preventing the reaction of the isocyanate groups with the non-water components of the foam and thereby causing a Low Index foam to behave like an even lower index foam. Foams with indexes above 115 (very high index foams) often show no increased hardening due to the stoichiometric excess of isocyanate when used with mechanical cooling.

Within the range of indexes of 90 to 120 it is known in the art that small swings (i.e., 1 to 2) in the index may lead to dramatic changes in foam stability, IFD, hardness, exotherms or other degradation properties associated with the exotherms and other physical characteristics of the foam. Thus, it has been difficult for those skilled in the art to predict the affect of changing the index of the foam, even by a few units, particularly in the low index range. However, the additives of the present invention, discussed below, solve this problem.

### Blowing Agents

Water (Component III) is preferably the sole blowing agent to produce carbon dioxide by reaction with isocyanate. Water should be used at about 1 to 12 pphp (parts per hundred of polyol (Group I)) and preferably between 2 and 10 pphp. At foam indexes below 100, the stoichiometric excess of water cools and blows via vaporization, not as part of the reaction to produce carbon dioxide. Other blowing agents that are conventionally used in the art may be used herein, but because of the utility of the formulation of the present invention, large amounts of such agents are no longer needed and in many cases none are needed at all.

### Surface Active Agents

Suitable stabilizers (Group IV) for slabstock applications include "hydrolyzable" polysiloxane-polyoxyalkylene block copolymers. Another useful class of foam stabilizers are the "non-hydrolyzable" polysiloxane-polyoxyalkylene block copolymers. The latter class of copolymers differs from the above-mentioned polysiloxane-polyoxyalkylene block copolymers in that the polysiloxane moiety is bonded to the polyoxyalkylene moiety through direct carbon-to-silicon bonds, rather than through carbon-to-oxygen-to-silicon bonds. Most preferred are the silicone surfactants L-620 and L-603 available from OSi Specialties, Inc. of Danbury, CT. The stabilizer should be present at about 0.0001 percent to about 5 percent by weight of the total reaction mixture.

### Catalysts

Component (V) includes the standard combination of tertiary amine and organometallic polyurethane catalysts which should be present at about 0.0001 to 5 weight percent of the reaction mixture. Suitable catalysts include, but are not limited to, dialkyltin salts of carboxylic acid, tin salts of organic acids, triethylene diamine (TEDA), bis (2,2'-dimethylaminoethyl) ether and similar compounds that are known to the art.

### Foam Processing Aid

A foam processing aid (Group VI) is used for enhancing the properties of low density, slabstock foam, said foam processing aid includes a crosslinking agent and/or extending agent and preferably a sufficient amount of a cell opening agent, to yield a polyurethane foam having a porosity greater than about 40 cubic feet per minute per square foot (CFM-ft²).

A relatively low molecular weight (generally below about 250 gms/mole) polyfunctional glycol crosslinking/extending agent is preferred to make stable, free-rise foams. The equivalent weights of these agents are generally less than about 200, but in certain circumstances they may be higher. The reactive group functionality of these compounds should be at least two, and preferably in a mixture of agents, at least one has a functionality of three or greater. The inventors have found that such polyfunctional isocyanate reactive compounds, such as a hexahydroxy functional alkane of a molecular weight of approximately 182 gms/mole with an equivalent weight of 30, are preferred. The inventors believe that this is so because higher functional compounds build polymer structure more readily than the lower functionality components. This is especially noticeable and important in Low Index formulations. With such high functionality components, the physical properties of Lower Index foams can be equivalent or better than High Index systems. The inventors have found that the number of such functional groups may be greater than the limitation of eight which is taught by Hager. The polyols that are of use herein, unlike those previously described, may include primary polyols.

As previously stated, mechanical cooling quenches ongoing chemical reactions rendering high index foams with the apparent physical properties of a lower index foam. The effect of halting the curing process has not been previously understood nor well studied. Surprisingly, the inventors have found that high functionality additives of the present invention more than compensate for the loss in physical properties of mechanical cooling by building polymer structure. Thus, the problems of the prior art of combining high index foams and mechanical cooling may be solved by the use of the present additives.

The crosslinking/extending agent should be present between about 0.1 and 10 pphp and preferably, between 0.2 and 5 pphp. Because polyfunctional isocyanate reactive compounds are being used herein, the amount of crosslinking/extending agent is lessened as compared to the teachings of Hager.

The inventors have also discovered that other polyfunctional isocyanate reactive components, which have not been previously known for use as additives in forming polyurethane foam, may be used with the present invention. These include, other high molecular weight cross-linking agents that are polyvinyl alcohol homo- and copolymers of numerous monomers, including polyvinyl butyral, which has a molecular weight of 2,000-20,000, hydroxyethyl(meth)acrylate homo- and copolymers of molecular weight 2,000-20,000, hydroxyl derivatives of polyvinyl ethers such as hydroxybutyl vinyl ether homo- and co-polymers of molecular weight 2,000-20,000 and similar polymers. These polymers may have equivalent weights greater than 200 which may be preferred in certain usages. Generally, the equivalent weight is between 50 and than 2,000. Moreover, the molecular weight of these polymers are from 2,000 to 20,000.

The cell opening agent is preferably a polyethylene oxide monol or polyol of an equivalent weight greater than 200, with 200-1,000 being preferable, with a hydroxyl functionality of two or greater. For example, one of the preferred cell opening agents is a polyethylene oxide adduct of glycerol of a molecular weight of about 990 gms/mole, with an equivalent weight of about 330. The cell opening agent should be present at about 0 to 20 pphp. Note that in certain cases, despite the equivalent weight difference, the cell opener may act as a crosslinking agent and vice-versa, thereby reducing the need for the crosslinking agent or cell opening agent, as the case may be.

The weight ratio of the cell opening agent to crosslinking agent present in the composition should be about 6:1 to 1:2, with 3:1 being the preferable ratio. The inventors have found that combinations of cell opening agent and crosslinking agent within this preferred range have a symbiotic effect on the foam. For example, when a cross-linking agent was used alone, foams were stable with no splits, but were tight with low air flow resulting in poor compression sets. If a cell opening agent is used alone the foam will be very open with center splits and possessed moderate compression sets at best. In the preferred range of ratios, combinations lead to spilt-free, stable open foams with low compression sets.

### Other Additives

Solid stabilizing polymers (VII) and other additives, including flame retardants, colorants, dyes and anti-static agents, which are conventionally known in the art may be used with the formulations of the present invention. Those listed in U.S. Patent No. 4,950,694 are exemplary and are incorporated herein.

### Process

Initially, the required amount of toluene diisocyanate (TDI) is calculated from the amount of polyol, water, foam processing aid and the desired index. The polyol, surfactant, amine, additive, water and other additives are mixed together and agitated. During such agitation, the organometallic catalyst and the isocyanate are added and mixing continues until homogeneous. When the mixing stops, the liquid foam mass is poured as quickly as possible into the desired form. After gas release starts occurring the foam is to be mechanically cooled. The mechanical cooling is intended to decrease the temperature of the foam, which may be higher than about 400°F, to temperatures below about 250°F to about 200°F, below the oxidation danger zone, and indeed may be used to cool the foam all the way down to room temperature.

Generally, it has been found that mechanical cooling technology result in higher compression sets than otherwise would be expected from a foam of that index. The present invention overcomes this problem with the before discussed use of the High Index and the crosslinking agent. Because the quenching of the mechanical cooling decreases the amount of curing and lowers the effective index of the foam, High Indexes may be used herein as well as the Low Index formulations.

There are various types of mechanical cooling technology that can be used with the present invention. Both fluid and gaseous cooling streams can be used by either applying the cooling stream to the foam block, or passing the foam block through an apparatus containing the cooling stream. Such processes include cutting slits in the surface of the foam, removing the skin of the foam thereby opening the foam and punching holes through the foam. Such mechanical cooling may be present in the manufacturing process as either an in-line process or a post-production process. Exemplary methods are described in U.S. Patent No. 4,537,912 issued to Griswold, U.S. Patent No. 5,128,379 issued to Stone, U.S. Patent No. 5,188,792 to Drye et al. and U.S. Patent No. 5,171,756 issued to Ricciardi, all of which disclose mechanical cooling technology that can be used and all of which are incorporated herein by reference. This mechanical cooling technology shortens the amount of time to produce polyurethane, i.e., generally on average 10-30 minutes with a range of 5 minutes to 4 hours. The foams may have one or more improved physical properties, including hysterisis, tear strength and tensile strength. Moreover, the resulting foams have compression sets of less than 20%.

### Example 1

The desired amount of TDI was calculated given the desired index and the hydroxyl group number of the polyol to be used. A Milltronics Microranger Ultrasonic level Measuring Instrument (Sonar Unit) was calibrated so that it could be used to measure how fast the foam rises, i.e., height as a function of time. A syringe for dispensing the tin catalyst was also calibrated, and the desired amount of tin catalyst was loaded into the syringe. The proper amount of TDI was weighed into a beaker.

100 grams of a glycerin started, 56 hydroxyl number polyoxypropylene terminated polyoxyethlene polyoxypropylene polyol, 1.0 grams of silicone surfactant L-620 from OSi Specialties, Inc., 0.22 grams of amine catalyst C-183 from OSi Specialties, Inc., 5.0 grams of an additive, and 5.25 grains of distilled water were weighed into a paper mixing cup. The additive was about 56% 500 molecular weight polyoxyethylene adduct of glycerin, 19% sorbitol, and 25% distilled water. The contents of the mixing cup were thoroughly agitated for 60 seconds using the drill press based blade mixing system at 2500 RPM attached to the pre-programmed timer. The drill press was stopped for 15 seconds after initial mixing (according to the pre-programmed schedule) in which time 0.09 grains of tin catalyst T-9 from Air Products Co. of Allentown, PA was added via syringe. The drill press was restarted and mixed for 9 more seconds. At this time, 64.38 grains of TDI were added in one quick addition with continued and additional mixing for 6 seconds. When the drill press was stopped the liquid foam mass was poured as quickly as possible into a 12x12x16 inch cardboard box which was lined with a polyethylene trash bag (less than about 5 seconds). The gas release was recognized as bubbles appearing at the surface of the foam. Exactly one minute after the gas release started to occur, 5-6 holes (2-3 mm diameter, 6 cm deep) were punched through the skin of the foam on the bottom of the foam to allow air movement through the bun. These holes were placed closely together so that the vacuum hose could cover all of them. In addition, 5-6 holes (2-3 mm diameter, 6 cm deep) were punched equidistantly throughout the skin of the top of the foam. The hose of the Sears Craftsman Wet/Dry Vac (8 gallon 2.25 HP) was placed on the bottom of the foam over the holes previously punched and air pulled through the foam for 2 minutes at full vacuum power.

A Sonar Unit was set to take data for up to 5 minutes after initial mixing. This sonar unit was removed prior to vacuum cooling. The final exotherm was recorded using a quick response digital thermometer. Finally, the foam was left inside the hood for 24 hours and thereafter was cut and its physical properties were evaluated.

### Comparative Example 1

The procedure was the same as the example above, as were the actual components, except that no additive was used and the weight of the components were varied slightly. Instead, 100 grams of polyol, 1.5 grams of silicone surfactant, 0.15 grams of amine, and 6.25 grams of distilled water were weighed into a paper mixing cup. The contents of the mixing cup were thoroughly agitated using the drill press based blade mixing system at 2500 RPM. 0.09 grams of tin catalyst were added via syringe and 64.38 grams of TDI was added in one quick addition with continued and additional mixing. Again, when the drill press stopped the liquid foam mass was poured as quickly as possible into a 12x12x16 inch cardboard box lined with a polyethylene trash bag and holes were punched in the foam. Exactly one minute after the gas release started to occur, 5-6 holes (approximately 2-3 mm diameter and 5-7 cm deep) were punched through the skin of the foam on the bottom of the foam to allow air movement through the bun. These holes were placed so that the vacuum hose could cover all of them. In addition, 5-6 holes (2-3 mm diameter and 5-7 cm deep) were punched equidistantly throughout the skin of the top of the foam. A vacuum hose was placed on the bottom of the foam over the holes previously punched and air was sucked through the foam.

The index number of the foam treated with both the additive and the mechanical cooling process was significantly lower than the index number for the foam treated only with the mechanical cooling process. In addition, the IFD values (ASTM D-3574) and compression sets (ASTM D-3574) of the foam treated with both the additive and mechanical cooling process were significantly lower. Finally, the percent return of the foam treated with both the additive and the mechanical cooling process was much higher than the foam treated with the mechanical cooling process alone. For a comparison of the physical properties of the foam treated with the mechanical cooling process and the foam treated with both the additive and the mechanical cooling process, see Table I below.

**Table 1**

| Chemical Components of Foam Formulations | Comparative Example | Example 1 |
|---|---|---|
| Polyol | 100 | 100 |
| Water (Total) | 6.25 | 6.5 |
| TDI-80 | 66.40 | 64.38 |
| Index | 98 | 85 |
| Tin | 0.17 | 0.09 |
| Amine | 0.15 | 0.22 |
| Silicone | 1.5 | 1.0 |
| Additive | --- | 5.0 |

| Foam Processing | | |
|---|---|---|
| Splits | none | none |
| Cell Size, mm | 0.8-1.5 | 0.8-1.2 |
| Max. Exotherm Temperature | 176 F | 163 F |
| Foam Temperature after | 26 F | 23 F |
| 2 minutes of cooling | | |

| Foam Physical Properties Using ASTM D-3574 | | |
|---|---|---|
| Density (lbs/ft³) | 1.09 | 1.08 |
| Airflow, ft³m/ft² | 129 | 140 |
| 25% IFD | 18.4 | 17.5 |
| 65% IFD | 35.9 | 32.3 |
| % Return | 60.7 | 65.1 |
| Load Ratio 65/25 | 1.95 | 1.85 |
| 50% Compression Sets | 10.7 | 7.6 |
| 90% Compression Sets | 35.1 | 15.6 |

### Example 2 and Comparative Example 2

Two other sets of foam whose compositions are set forth below in Table II were made. The polyol used was equivalent to the polyol used in Example 1, the amine was similar to A-33 from OSi Specialties, the tin was T-9, the silicone was L-620 from OSi Specialties and the additive was the same as that used in Example 1. Example 2 was mechanically cooled per U.S. Patent No. 5,171,756, while Comparative Example 2 was not. The resulting physical characteristics of the foams are also set forth below. Surprisingly, the cooling of a Low-Index foam composition with an additive did not result in an inferior product, but rather showed some improvement in some physical characteristics.

**TABLE 2**

| Chemical Components of Foam Formulations | Comparative Example 2 | Example 2 |
|---|---|---|
| Cooling | No | Yes |
| Water (Total) | 6.5 | 6.5 |
| Index | 85 | 85 |
| Tin | 0.1368 | 0.1368 |
| Amine | 0.09 | 0.09 |
| Silicone | 1.2 | 1.2 |
| Additive | 5 | 5 |
| Methylene Chloride | 3 | 3 |
| TDI-80 | 64.4 | 64.4 |

| Foam Physical Properties Using ASTM D-3574 | | |
|---|---|---|
| Density (lbs/ft³) | 0.98 | 0.99 |
| 25% IFD | 18.3 | 17.2 |
| % Return | 60.5 | 63.3 |
| Load Ratio 65/25 | 2.19 | 2.13 |
| 50% Compression Sets | 11.3 | 16.5 |
| 90% Compression Sets | 23.0 | 25.0 |
| Airflow, ft³m/ft² | 90.0 | 97.0 |

## Claims

1. A process for making conventional polyurethane slabstock foam comprising:
(a) forming a polyurethane foam from:
i. polyether polyol having an equivalent weight between 400 and 1500, nominal functionality of at least two;
ii. water in the amount of 1.0 to 12 pphp;
iii. an organic isocyanate having an average functionality of between 1.5 and 6 in an amount sufficient to establish an index between 50 and 150;
iv. a surface active agent at 0.0001 to 5 weight percent;
v. a polyurethane foam catalyst at 0.0001 to 5 weight percent; and
vi. a foam processing aid comprising a crosslinking/extending agent having at least 2 reactive functional groups at 0.1 to 40 pphp; and
(b) mechanically cooling said polyurethane foam after the foam has risen.

2. A process according to claim 1 wherein the foam processing aid additionally comprises a cell opener.

3. A process according to claim 2 wherein the cell opener is a polyethylene oxide adduct of glycerol.

4. A process according to claim 2 wherein the weight ratio of the cell opening agent to crosslinking/extending agent is between 6:1 to 1:2.

5. A process according to claim 4 wherein the weight ratio is 3:1.

6. A process according to claim 1 wherein the isocyanate has an average functionality of two.

7. A process according to claim 1 wherein the crosslinking/extending agent has a molecular weight of below 250 grams per mole and has at least three reactive functional groups.

8. A process according to claim 7 wherein the crosslinking/extending agent is a hexahydroxy functional molecule.

9. A process according to claim 1 wherein the foam processing aid has a molecular weight from 2,000 to 20,000 and an equivalent weight between 50 and 2,000.

10. A process according to claim 1 wherein the mechanical cooling is selected from the group consisting of (a) removing the surface of the polyurethane foam and passing a fluid across the foam; (b) cutting slits in the surface of the polyurethane foam and passing a fluid through the polyurethane foam; and (c) punching holes through the polyurethane foam and passing a fluid through the foam.

11. A process according to claim 1 wherein the mechanical cooling is commenced after gas release starts to occur from the polyurethane foam.

12. A polyurethane foam made according to the process of claim 1.

13. A process for making conventional polyurethane slabstock foam comprising:
(a) forming a polyurethane foam from:
i. polyether polyol having an equivalent weight between 400 and 1500, nominal functionality of at least two;
ii. water in the amount of 1.0 to 12 pphp;
iii. an organic isocyanate having an average functionality of 2 in an amount sufficient to establish an index between 95 and 115;
iv. a surface active agent at 0.0001 to 5 weight percent;
v. a polyurethane foam catalyst at 0.0001 to 5 weight percent; and
vi. a foam processing aid comprising a crosslinking/extending agent having at least 2 reactive functional groups at 0.1 to 40 pphp; and
(b) mechanically cooling said polyurethane foam after it has risen.

14. A process according to claim 13 wherein the foam processing aid additionally comprises a cell opener.

15. A process according to claim 14 wherein the cell opener is a polyethylene oxide adduct of glycerol.

16. A process according to claim 14 wherein the weight ratio of the cell opening agent to crosslinking/extending agent is between 6:1 to 1:2.

17. A process according to claim 13 wherein the crosslinking/extending agent has a molecular weight of below 250 grams per mole and has at least three reactive functional groups.

18. A process according to claim 17 wherein the crosslinking/extending agent is a hexahydroxy functional molecule.

19. A process according to claim 13 wherein the foam processing aid has a molecular weight from 2,000 to 20,000 and an equivalent weight between 50 and 2,000.

20. A process according to claim 13 wherein the mechanical cooling is selected from the group consisting of (a) removing the surface of the polyurethane foam and passing a fluid across the foam; (b) cutting slits in the surface of the polyurethane foam and passing a fluid through the polyurethane foam; and (c) punching holes through the polyurethane foam and passing a fluid through the foam.
